# EUROPEAN PATENT SPECIFICATION

(11) **EP 2 191 992 B1**
(45) Date of publication and mention of the grant of the patent: **02.11.2011**
(21) Application number: 10156538.0
(22) Date of filing: 30.06.2006
(51) Int. Cl.: B60J 3/02, B60J 7/043, B60N 2/46

(54) **A mechanism for changing relative positions and attitudes of two objects connected to each other**
Mechanismus zum Ändern von relativen Positionen und Lagen von zwei miteinander verbundenen Objekten
Mécanisme utilisé pour modifier les positions et attitudes relatives de deux objets reliés l'un à l'autre

(30) Priority: 29.07.2005 KR 20050069268
(43) Date of publication of application: 02.06.2010
(62) Divisional of application: 06769122.0
(73) Proprietor: QLT Co., Ltd., Seoul 136-701 (KR)
(72) Inventor: Lee, Chang Seop, Seoul 137-060 (KR)
(74) Representative: Hübner, Gerd

(56) References cited:
- JP-A- 2005 199 813
- KR-Y1- 910 000 721
- US-A- 4 176 875
- US-A- 5 350 212

## Description

The present invention relates to a mechanism for changing relative positions and attitudes of tow object connected to each other and, more particularly, to a mechanism for connection between one fixed object (hereinafter, referred to as "stationary body") and an object (hereinafter, referred to as "movable body") whose position and attitude relatively changes with respect to the stationary body.

Generally, a sunvisor for a vehicle is configured to have three positions -'accommodated position' in which the sunvisor is accommodated parallel to a roof of a vehicle, 'front side blocking position' in which the sunvisor blocks light entering the front side of the vehicle, and 'lateral side blocking position' in which the sunvisor blocks light entering the lateral side of the vehicle. In order to allow the sunvisor to have various positions with respect to a vehicle body, a mechanism for connecting a stationary body that is fixed to the vehicle body and a movable body (here, a light-shielding panel of the sunvisor) that changes appropriate positions and attitudes with respect to the stationary body. US 4,176,875 shows a sunvisor.

An armrest of a vehicle is preferably movable between a projected position in which the armrest projects from a seat so as to support an occupant's arm and a depression position in which the armrest is rotated towards a seat so as to make the best use of the space. In order to allow the armrest to move between the positions, a mechanism which connects a stationary body which fixes the armrest to a seat or a structure around the seat and a movable body (armrest) which changes positions and attitudes with respect to the stationary body is required.

It is an object of the present invention to provide a connecting mechanism between a stationary body and a movable body which can be used in a device for changing relative positions and attitudes of the movable body with respect to the optional stationary body, such as an armrest and sunvisor, and has a simple structure.

In order to achieve the above-described object, according to claim 1, a mechanism for changing relative positions and attitudes of two objects connected to each other includes: a stationary body; a movable body having a guide; a rotation arm that is rotatably disposed in the stationary body and has a pivot protrusion rotatably inserted in the movable body; and a guide pin that is disposed to protrude from the stationary body so as to be guided by the guide, wherein
the pivot protrusion of the rotation arm is positioned above the guide pin, and
the guide is in the form of a spiral groove that is constantly inclined towards the guide pin from the pivot protrusion with respect to the rotation plane of the rotation arm in an initial position.

According to the aspects of the present invention, provided is a simple connecting mechanism disposed between a stationary body and a movable body to simply change relative positions and attitudes of the movable body with respect to the stationary body, and it is possible to simply manufacture a sunvisor according to claims 4 to 6, an armrest, a portable table by using the mechanism.
- FIG. 1: is a view showing a mechanism for changing relative positions and attitudes of two objects connected to each other, said mechanism is not part of the invention.
- FIG. 2: is a view showing an initial position of FIG. 1 in detail.
- FIG. 3: is a view showing a final position of FIG. 1 in detail.
- FIGS. 4 to 8: are views illustrating said mechanism.
- FIG. 9: is a view showing a mechanism for changing relative positions and attitudes of two objects connected to each other according to the present invention.
- FIG. 10: is a view showing an initial position of FIG. 9 in detail.
- FIG. 11: is a view showing a final position of FIG. 9 in detail.
- FIGS. 12 to 16: are views illustrating the mechanism according to the present invention.

Hereinafter, preferred embodiment of the present invention will be described with reference to the accompanying drawings.

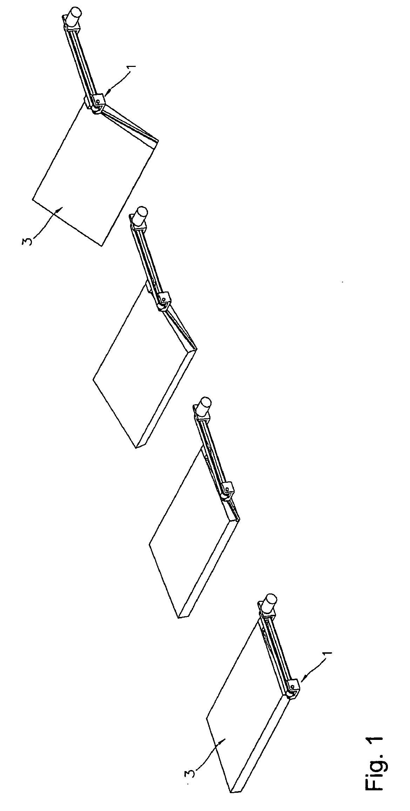

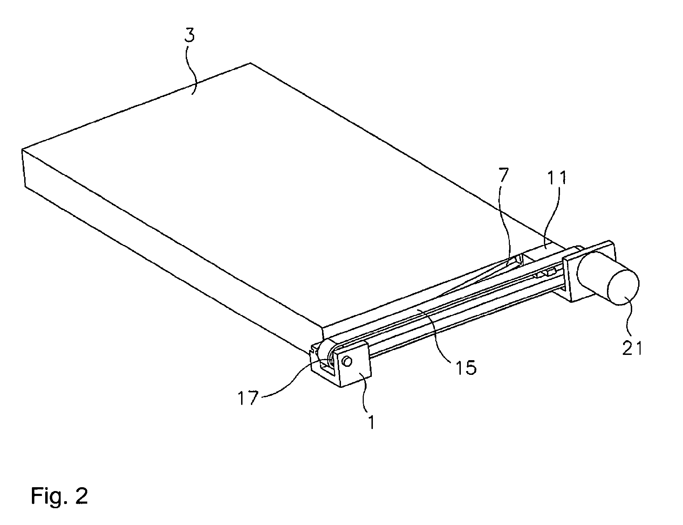

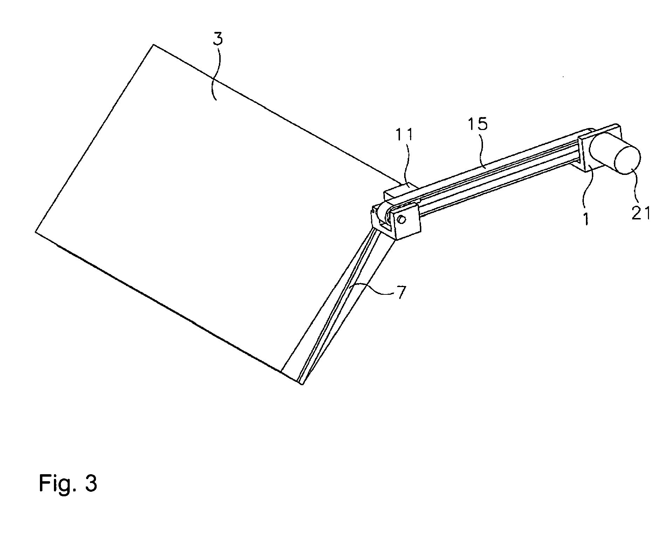

FIG. 1 is a view showing a mechanism which is not part of the invention, sequentially illustrating changes of positions and attitudes of a movable body 3 with respect to a stationary body 1 from an initial position of the leftmost side to a final position of the rightmost side. FIGS. 2 and 3 illustrate the initial and final positions in detail.

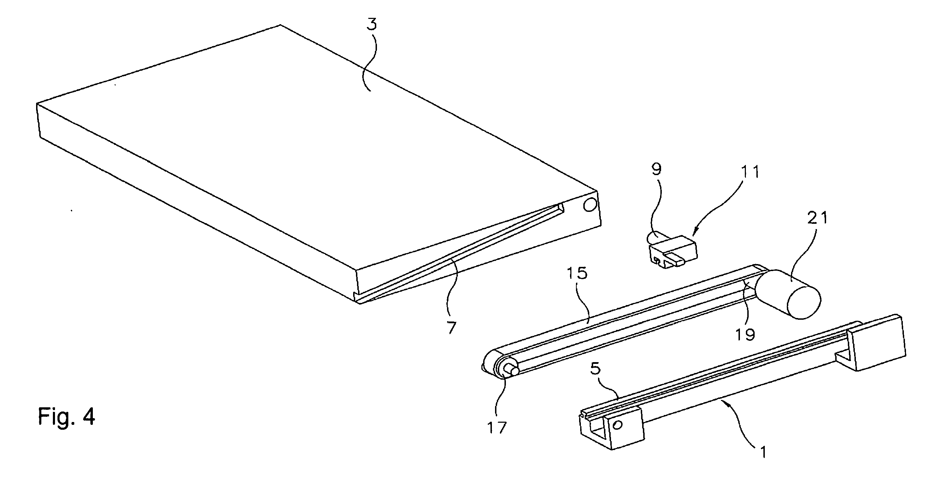

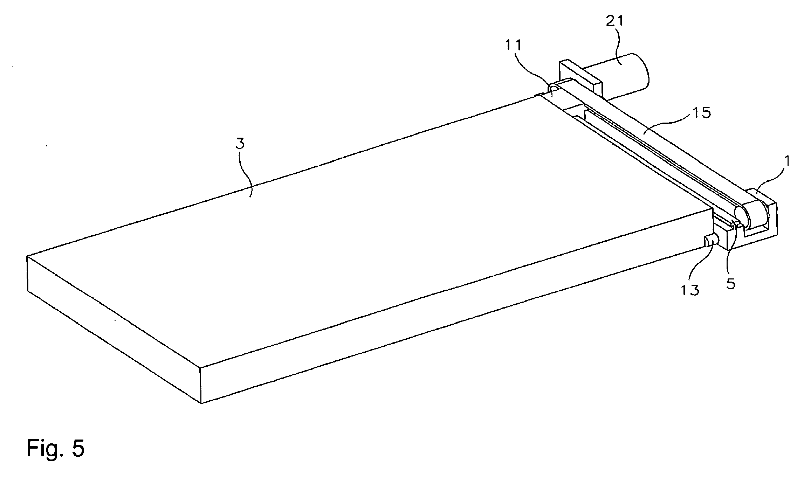

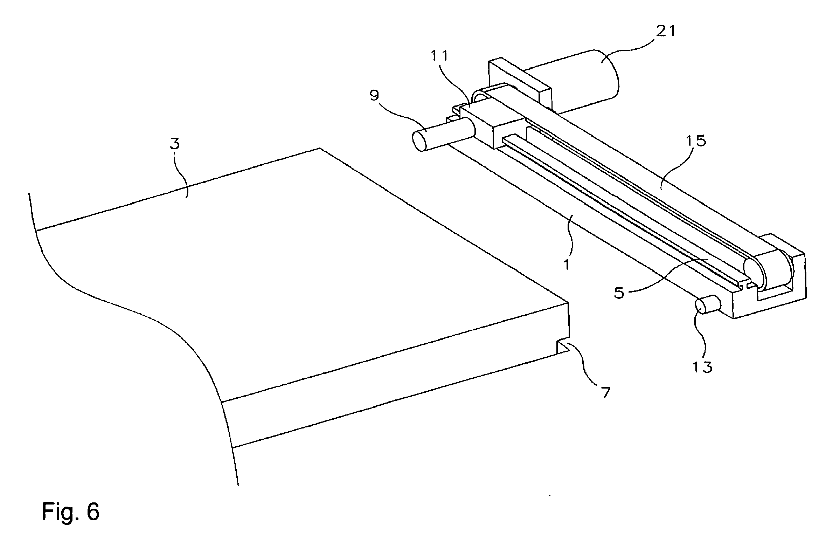

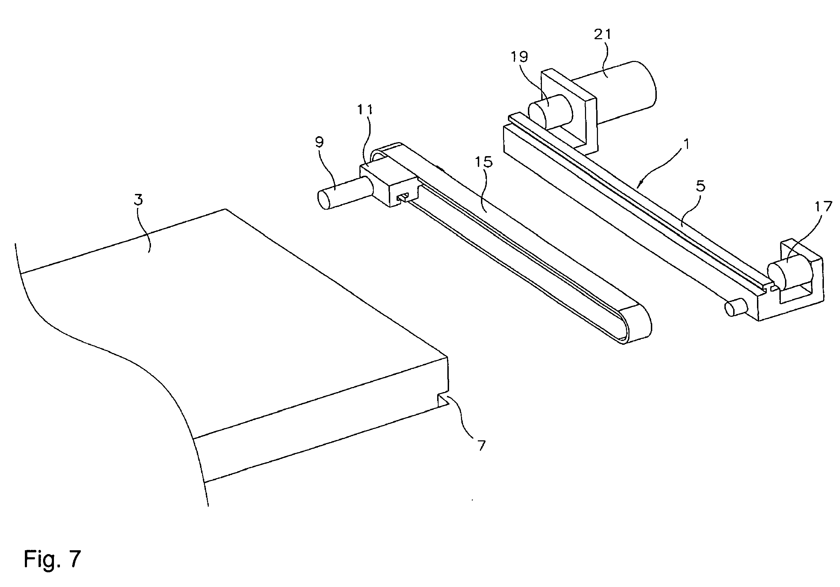

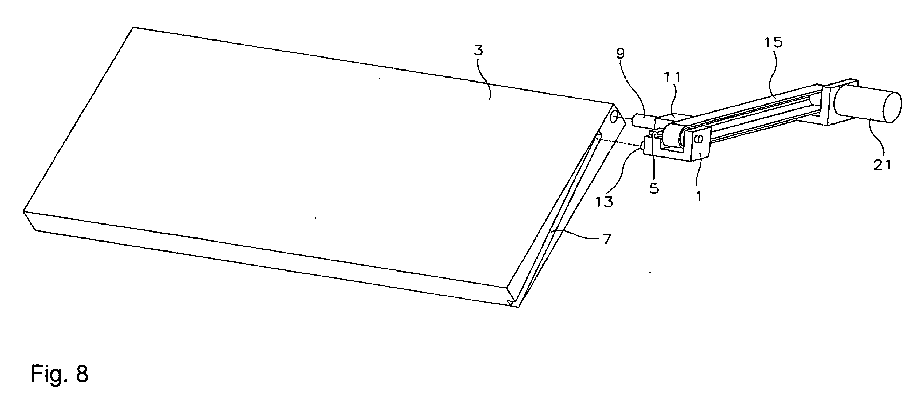

FIGS. 4 to 8 specifically illustrate a connecting mechanism provided between the stationary body 1 and the movable body 3 in order to embody the movement shown in FIG. 1. With reference to the drawings, the mechanism includes the stationary body 1 having a linear guide 5, the movable body 3 having a guide 7, a slider 11 disposed to linearly slide on the linear guide 5 and having a pivot protrusion 9 rotatably inserted in the movable body 3, a guide pin 13 disposed to protrude from the stationary body 1 to be guided by the guide 7.

The pivot protrusion 9 of the slider 11 is positioned above the guide pin 13, and the guide 7 is in the form of a linear groove which inclines toward the guide pin 13 from the pivot protrusion 9 with respect to the linear guide 5 in the initial position.

Although the guide 7 is in the form of a linear groove in the present embodiment, it can be modified into various shape, such as a circular arc, having an arbitrary planar locus on the plane of the movable body vertically facing the guide pin 13, so that changes of positions and attitudes of the movable body with respect to the stationary body can be embodied somewhat differently.

Further, in the present embodiment, the mechanism further includes a linear movement means which allows the slider 11 to linearly slide along the linear guide 5, so that the relative positions and attitudes of the movable body 3 with respect to the stationary body 1 automatically change.

In the present embodiment, the linear movement means includes a belt 15 to which the slider 11 is connected, an idler pulley 17 disposed in the stationary body 1 to support the belt 15, a drive pulley 19 disposed in the stationary body 1 to drive the belt 15, and a motor 21.

Besides, a rack is formed in the stationary body 1, and the mechanism includes a pinion which is geared with the rack and rotatably disposed in the slider 11. Rotation of the pinion enables the slider 11 to move linearly.

In the initial position of the leftmost of FIG. 1, as the motor 21 rotates to drive the belt 15, the slider 11 fixed to the belt 15 linearly moves to the left (in the drawing) along the guide 5.

Since the pivot protrusion 9 of the slider 11 is rotatably inserted in the movable body 3, the movable body 3 linearly moves along the slider 11, following the movement of the slider 11.

The guide pin 13 fixed to the stationary body 1 is inserted in the guide 7 of the movable body 3, and the guide 7 is inclined with respect to the guide 5. Therefore, if the movable body 3 linearly moves towards the guide pin 13 together with the slider 13, the movable body 3 rotates around the pivot protrusion 9 as a rotation axis as the pivot protrusion 9 gets closer to the guide pin 13.

In other words, the movable body 3 linearly moves and rotates, as it linearly moves together with the slider 11 and thus gets closer to the guide pin 13.

The movable body 3 linearly moves and rotates with respect to the stationary body 1 according to the drive of the belt 15, and it finally moves to the rightmost position, reaching to the final position in which relative positions and attitudes with respect to the stationary body 1 have completely changed.

On the other hand, if the motor is reversely rotated, the relative positions and attitudes of the movable body 3 with respect to the stationary body 1 change from the final position to the initial position. Finally, the movable body 3 can automatically switch between the initial position and the final position with respect to the stationary body 1.

As described above, the mechanism for changing relative positions and attitudes of the movable body 3 with respect to the stationary body 1 can be applied to a sunvisor, armrest, portable table, etc.

In other words, when the stationary body 1 corresponds to a part to be fixed to a vehicle body and the movable body 3 corresponds to a light-shielding panel of the sunvisor, the light-shielding panel is accommodated substantially parallel to a roof panel of a vehicle in the initial position of FIG. 1, and the light-shielding panel protrudes towards an occupant in the final position so as to block light entering the front side of a vehicle.

Naturally, as the belt 15 is driven by operating the motor 21, the movable body 3 can automatically switch between the accommodated position and the front side blocking position with respect to the stationary body 1. Further, if the linear movement means is not provided, an occupant can manually push or pull the movable body 3 along the linear guide 5 so as to switch between the two positions.

Likewise, if the stationary body 1 is fixed to a seat or a structure around the seat and the movable body 3 corresponds to an armrest, the initial position of FIG. 1 corresponds to a position in which the armrest stands substantially vertical to a seat back of the seat, and the final position of FIG. 1 corresponds to a position in which the armrest protrudes from the seat so as to support an occupant's arm.

Of course, as well in the armrest device configured as described above, the linear movement means allows switch between the initial position and the final position. If a separate linear movement means is not provided, an occupant can manually switch between the two positions.

As another example of the above-described mechanism, a portable table disposed at the rear side of a seat back of a vehicle can be taken. In this case, a panel forming the table corresponds to the movable body 3 and the stationary body 1 is fixed to the seat back, and the panel is accommodated substantially parallel to a seat back in the initial position, and as the position is changed to the final position, the panel is unfolded horizontally for the convenience of an occupant at the rear side of the seat back.

In the mechanism, the relative positions and attitudes change as the movable body 3 linearly moves and rotates with respect to the stationary body 1. Meanwhile, in an embodiment of the present invention, a mechanism is disclosed in which the relative positions and attitudes change as the movable body 3 rotates around two separate rotation axes with respect to the stationary body 1.

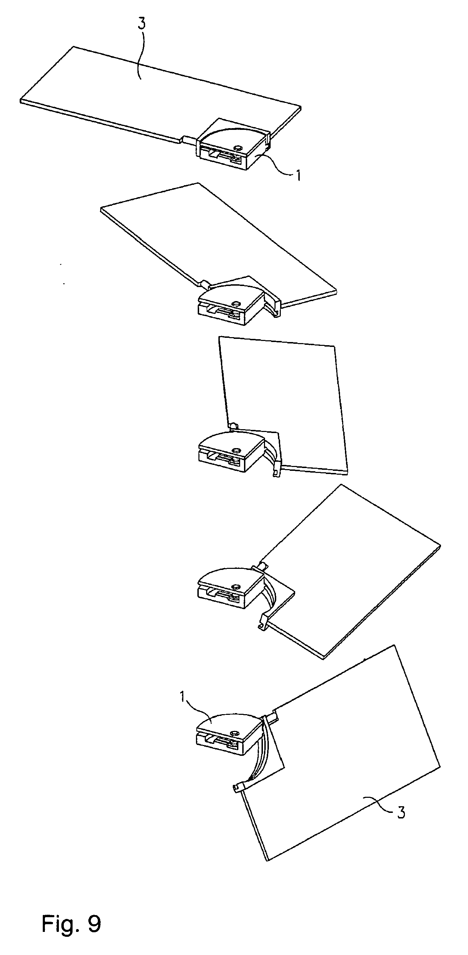

FIG. 9 is a view showing an embodiment of the present invention, sequentially illustrating changes of positions and attitudes from an initial position of the uppermost side to a final position of the lowermost side.

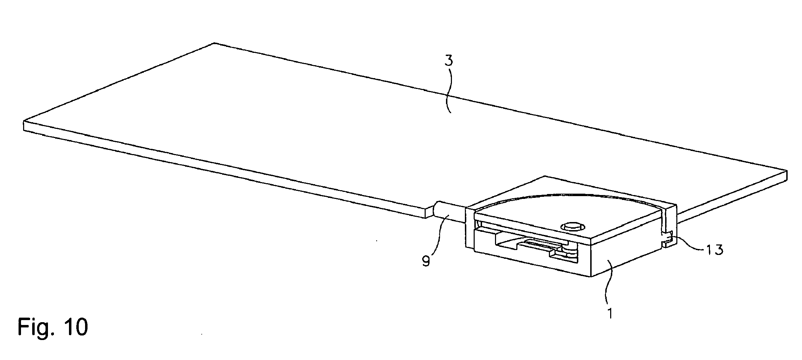

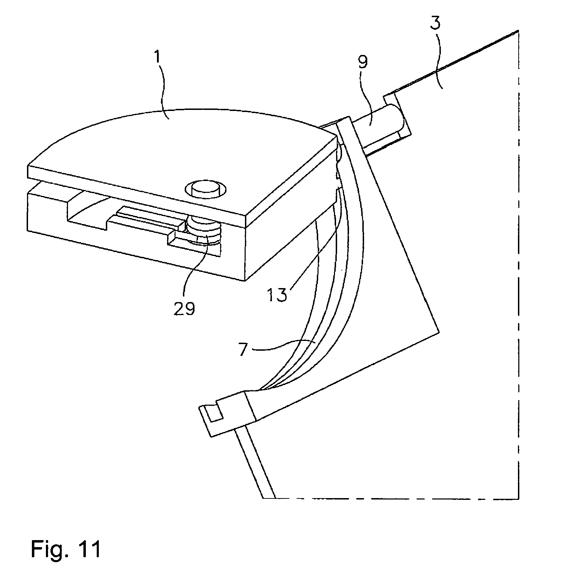

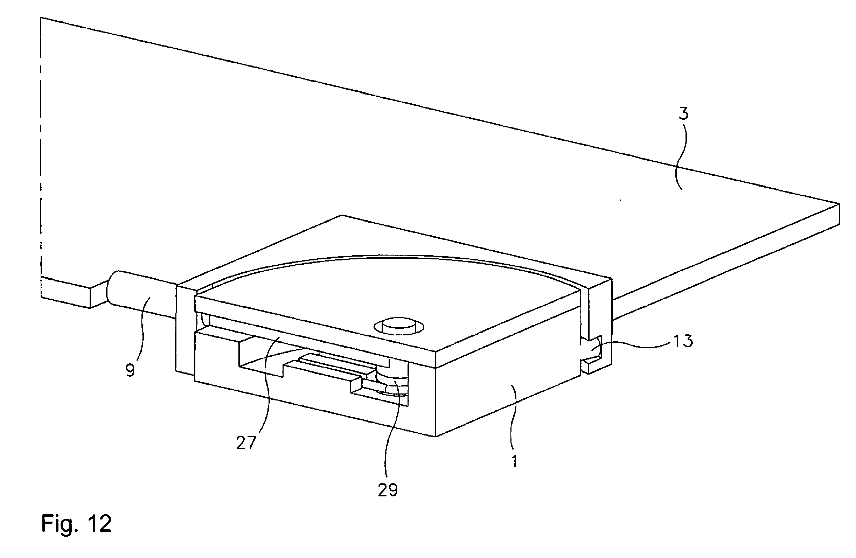

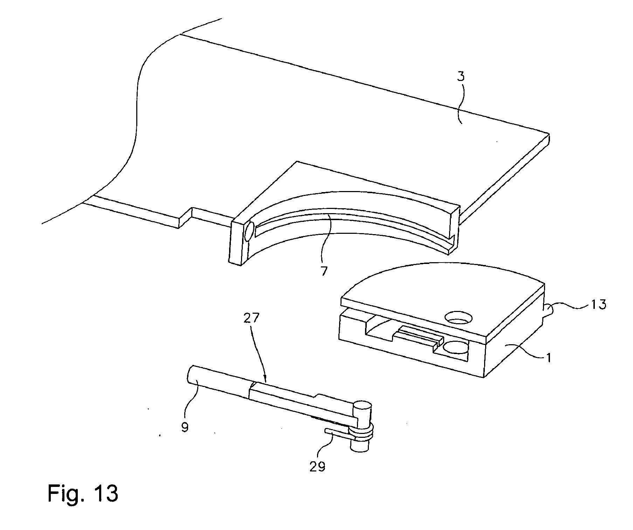

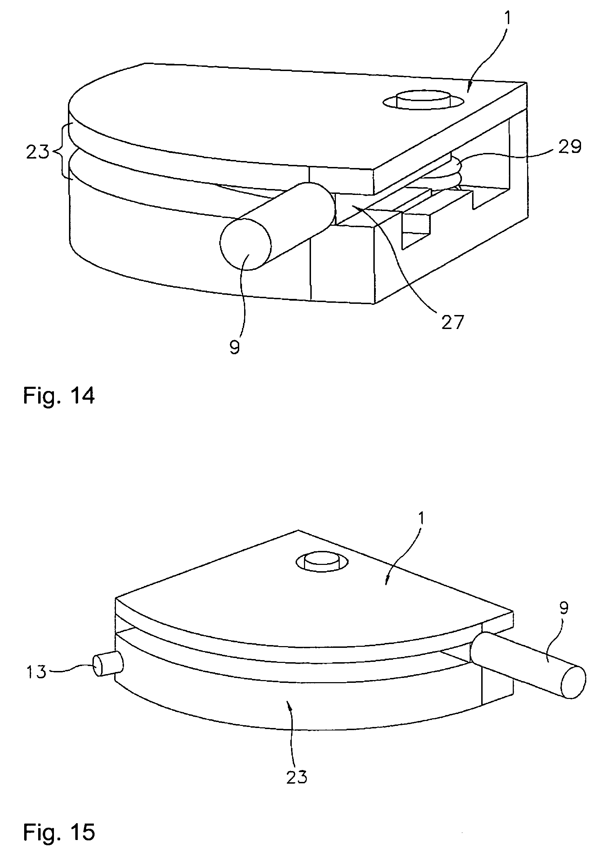

FIGS. 10 and 11 illustrate the initial and final positions in detail. FIGS. 12 to 16 specifically illustrate the mechanism according to the present embodiment. With reference to the drawings, the mechanism includes the stationary body 1, the movable body 3 having the guide 7, a rotation arm 27 which is rotatably disposed in the stationary body 1 and has the pivot protrusion 9 rotatably inserted in the movable body 3, and the guide pin 13 disposed to protrude from the stationary body 1 so as to be guided by the guide 7.

The pivot protrusion 9 of the rotation arm 27 is positioned above the guide pin 13, and the guide 7 is in the form of a spiral groove which is constantly inclined towards the guide pin 13 from the pivot protrusion 9 with respect to a rotation plane of the rotation arm 27 in the initial position.

In other words, the guide 7 is formed in a spiral shape that is concentric with the rotation axis of the rotation arm 27 and gradually inclined towards the guide pin 13 from the pivot protrusion 9.

It is not necessary to form the guide 7 to be constantly inclined towards the guide pin 13 from the pivot protrusion 9 with respect to the rotation plane of the rotation arm 27. That is, the inclination of the guide 7 can be modified to change the relative positions and attitudes of the stationary body 1 with respect to the movable body 3.

Meanwhile, in the present embodiment, the stationary body 1 includes a circular arc guide 23. The circular arc guide 23 is formed along an arc having a constant radius from the rotation axis of the rotation arm 27 so as to form an arc surface facing the surface of the guide 7 of the movable body 3. Therefore, the circular arc guide 23 can guide the rotation arm 27 and the movable body 3 to more stably rotate with respect to the stationary body 1.

Further, in the present embodiment, the mechanism further includes a rotating means which rotates the rotation arm 27 along the circular arc guide 23, and the rotating means is a torsion spring 29 disposed between the rotation arm 27 and the stationary body 1.

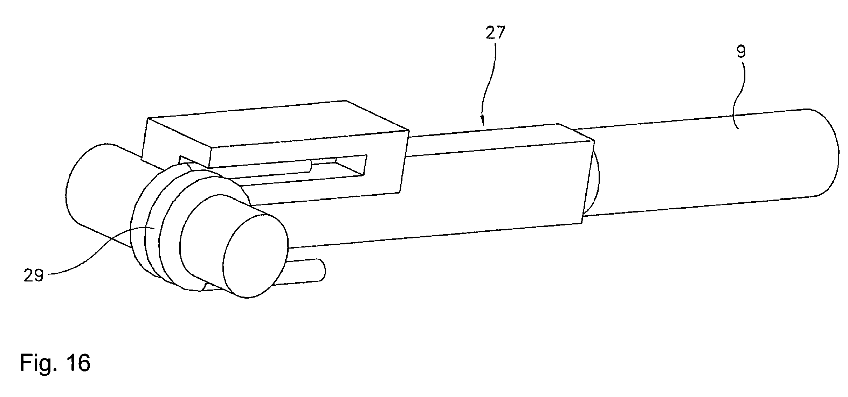

One end of the torsion spring 29 is inserted in the rotation arm 27 as shown in FIG. 16, and the other end is inserted in the stationary body 1, so that the torsion spring 29 applies an elastic force in a direction to move the rotation arm 27 to the final position.

Therefore, it can be only seen the changes of positions from an initial position a final position of the lowermost side of the movable body 3 in FIG. 9. However, in order to sustain the initial position, it is preferable to configure the mechanism to prevent the movable body 3 from moving due to an elastic force of the torsion spring by using a fixing clip connected to the stationary body 1 to fix the movable body 3 thereto.

Of course, with the rotation means, the rotation arm 27 can be rotated with respect to the stationary body 1 by using a separate motor other than the torsion spring 29. In this case, the above-mentioned fixing clip is unnecessary.

If the movable body 3 is released by releasing the fixing clip in the initial position of the uppermost side of FIG. 9, the rotation arm 27 rotates along the circular arc guide 23 by an elastic force of the torsion spring 29.

Since the rotation arm 27 includes the pivot protrusion 9 that is rotatably inserted in the movable body 3, the movable body 3 rotates along the circular arc guide 23 in accordance with the rotation of the rotation arm 27.

The guide pin 13 which protrudes from the stationary body 1 is inserted in the guide 7 of the movable body 3, and the guide 7 is inclined towards the circular arc guide 23. Therefore, as the rotation arm 27 rotates and approaches towards the guide pin 13, the movable body 3 gradually rotates around the pivot protrusion 9 as the rotation axis.

In other words, while revolving around the rotation axis of the rotation arm 27 together with the rotation arm 27, the movable body 3 rotates around the pivot protrusion 9 as the rotation axis.

As described above, the movable body 3 revolves and rotates by an elastic force of the torsion spring 29 applied between the rotation arm 27 and the stationary body 1 and thus moves to the final position of the lowermost side of FIG. 9. In other words, the relative positions and attitudes of the movable body 3 with respect to the stationary body 1 completely change to the final position.

On the other hand, if an occupant resists against the force of the torsion spring 29 and reversely rotates the rotation arm 27, the movable body 3 reversely revolves and rotates and then returns to the initial position, and the initial position can be sustained by using a fixing clip.

As described above, the mechanism for changing the relative positions and attitudes of the movable body 3 with respect to the stationary body 1 can be applied to a sunvisor.

That is, if the stationary body 1 corresponds to a stationary part to be fixed to a roof panel of a vehicle, and the movable body 3 corresponds to a light-shielding panel of the sunvisor, the initial position of FIG. 9 corresponds to a position, seen from the front side of the vehicle, in which the light-shielding panel is accommodated substantially parallel to the roof panel of the vehicle.

Of course, the movable body 3 is sustained to be fixed to the vehicle body in the initial position by a separate fixing clip. Further, if an occupant has the fixing clip released, the movable body 3 revolves and rotates along with the rotation arm 27 by an elastic force of the torsion spring 29 and then automatically reaches to the final position.

If an occupant pushes the movable body 3 while resisting against an elastic force that the torsion spring 29 provides after using, the movable body 3 reversely revolves and rotates along with the rotation arm 27 and then returns to the initial position, and the initial position, that is, the accommodated position, can be sustained by fixing the movable body 3 to the fixing clip.

On the other hand, when a separate motor is used without using the torsion spring 29 as the rotation means, it is possible to provide a more sophisticated product, by automatically changing the initial position and the final position of the light-shielding panel, that is, the movable body 3 with respect to the stationary body 1 according to whether power is supplied to a motor or not and switch of the supply direction.

## Claims

1. A mechanism for changing relative positions and attitudes of two objects connected to each other, comprising:
- a stationary body (1);
- a movable body (3) having a guide (7); and
- a rotation arm (27) that is rotatably disposed in the stationary body (1) and has a pivot protrusion (9) rotatably inserted in the movable body (3);
- **characterized by** a guide pin (13) that is disposed to protrude from the stationary body (1) so as to be guided by the guide (7), wherein
- the pivot protrusion (9) of the rotation arm (27) is positioned above the guide pin (13), and
- the guide (7) is in the form of a spiral groove that is constantly inclined towards the guide pin (13) from the pivot protrusion (9) with respect to the rotation plane of the rotation arm (27) in an initial position.

2. The mechanism of claim 1, further comprising a rotating movement means which allows the rotation arm (27) to rotate with respect to the stationary body (1).

3. The mechanism of claim 2,
wherein the rotating movement means is a torsion spring (29) disposed between the rotation arm (27) and the stationary body (1).

4. A sunvisor, comprising:
- a stationary body (1) having a circular arc guide;
- a light-shielding panel (3) having a guide (7); and
- a rotation arm (27) that is rotatably disposed along the circular arc guide (7) in the stationary body (1) and has a pivot protrusion (9) rotatably inserted in the light-shielding panel (3);
- **characterized by** a guide pin (13) that is disposed to protrude from the stationary body (1) so as to be guided by the guide (7), wherein
- the pivot protrusion (9) of the rotation arm (27) is positioned above the guide pin (13), and
- the guide (7) is in the form of a spiral groove that is constantly inclined towards the guide pin (13) from the pivot protrusion (9) with respect to the rotation plane of the rotation arm (27) in an initial position.

5. The sunvisor of claim 4, further comprising:
a rotating movement means which allows the rotation arm (27) to rotate along with the circular arc guide (7).

6. The mechanism of claim 5,
wherein the rotating movement means is a torsion spring (29) disposed between the rotation arm (27) and the stationary body (1).

## Patentansprüche

1. Mechanismus zum Ändern relativer Positionen und Lagen von zwei miteinander verbundenen Objekten, mit:
- einem stationären Körper (1);
- einem beweglichen Körper (3) mit einer Führung (7); und
- einem Dreharm (27), der drehbar in dem stationären Körper (1) angeordnet ist und einen Gelenkvorsprung (9) hat, der drehbar in den beweglichen Körper (3) eingesetzt ist; **gekennzeichnet durch** einen Führungsstift (13), der so angeordnet ist, dass dieser von dem stationären (1) so vorsteht, dass dieser **durch** die Führung (7) geführt werden kann, wobei
- der Gelenkvorsprung (9) des Dreharms (27) oberhalb des Führungsstifts (13) positioniert ist, und
- die Führung (7) in Form einer Spiralnut vorliegt, die von dem Gelenkvorsprung (9) in Bezug zu der Rotationsebene des Dreharms (27) in einer Anfangsposition konstant in Richtung des Führungsstifts (13) geneigt ist.

2. Mechanismus nach Anspruch 1, ferner mit einem drehenden Bewegungselement, welches dem Dreharm (27) ermöglicht, in Bezug zu dem stationären Körper (1) zu drehen.

3. Mechanismus nach Anspruch 2, in welchem das drehende Bewegungselement eine Torsionsfeder (29) ist, die zwischen dem Dreharm (27) und dem stationären Körper (1) angeordnet ist.

4. Sonnenblende, mit:
- einem stationären Körper (1) mit einer kreisbogenförmigen Führung;
- einem Licht abschirmenden Feld (3) mit einer Führung (7); und
- einem Dreharm (27), der zusammen mit der kreisbogenförmigen Führung (7) in dem stationären Körper (1) drehbar angeordnet ist und einen Gelenkvorsprung (9) hat, der in das Licht abschirmende Feld (3) eingesetzt ist;
**gekennzeichnet durch** einen Führungsstift (13), der so angeordnet ist, dass dieser von dem stationären Körper (1) so vorsteht, dass dieser **durch** die Führung (7) geführt werden kann, wobei
- der Gelenkvorsprung (9) des Dreharms (27) oberhalb des Führungsstifts (13) positioniert ist; und
- die Führung (7) in Form einer Spiralnut vorliegt, die von dem Gelenkvorsprung (9) in Bezug zu der Rotationsebene des Dreharms (27) in einer Anfangsposition konstant in Richtung des Führungsstifts (13) geneigt ist.

5. Sonnenblende nach Anspruch 4, ferner mit:
- einem drehenden Bewegungselement, welches dem Dreharm (27) ermöglicht, sich zusammen mit der kreisbogenförmigen Führung (7) zu drehen.

6. Mechanismus nach Anspruch 5,
in welcher das drehende Bewegungselement eine Torsionsfeder (29) ist, die zwischen dem Dreharm (27) und dem stationären Körper (1) angeordnet ist.

## Revendications

1. Mécanisme permettant de changer les positions et les postures relatives de deux objets reliés entre eux, comprenant :
- un corps stationnaire (1) ;
- un corps mobile (3) comprenant un guide (7) ; et
- un bras de rotation (27) qui est disposé en rotation dans le corps stationnaire (1) et comprend une protubérance de pivotement (9) insérée en rotation dans le corps mobile (3) ;
**caractérisé par**
- une tige de guidage (13) qui est disposée de sorte à faire saillie du corps stationnaire (1) de manière à être guidée par le guide (7), où
- la protubérance de pivotement (9) du bras de rotation (27) est positionnée au-dessus de la tige de guidage (13), et
- le guide (7) se présente sous la forme d'une rainure en spirale qui est constamment inclinée vers la tige de guidage (13) à partir de la protubérance de pivotement (9) par rapport au plan de rotation du bras de rotation (27) dans une position initiale.

2. Mécanisme de la revendication 1, comprenant en outre
un moyen de mouvement de rotation qui permet au bras de rotation (27) de tourner par rapport au corps stationnaire (1).

3. Mécanisme de la revendication 2,
dans lequel le moyen de mouvement de rotation est un ressort de torsion (29) disposé entre le bras de rotation (27) et le corps stationnaire (1).

4. Pare-soleil, comprenant :
- un corps stationnaire (1) comprenant un guide en arc circulaire ;
- un panneau de protection contre la lumière (3) comprenant un guide (7) ; et
- un bras de rotation (27) qui est disposé en rotation le long du guide en arc circulaire (7) dans le corps stationnaire (1) et comprend une protubérance de pivotement (9) insérée en rotation dans le panneau de protection contre la lumière (3) ;
**caractérisé par**
- une tige de guidage (13) qui est disposée de sorte à faire saillie du corps stationnaire (1) de manière à être guidée par le guide (7), où
- la protubérance de pivotement (9) du bras de rotation (27) est positionnée au-dessus de la tige de guidage (13), et
- le guide (7) se présente sous la forme d'une rainure en spirale qui est constamment inclinée vers la tige de guidage (13) de la protubérance de pivotement (9) par rapport au plan de rotation du bras de rotation (27) dans une position initiale.

5. Pare-soleil de la revendication 4, comprenant en outre :
un moyen de mouvement de rotation qui permet au bras de rotation (27) de tourner avec le guide en arc circulaire (7).

6. Mécanisme de la revendication 5,
dans lequel le moyen de mouvement de rotation est un ressort de torsion (29) disposé entre le bras de rotation (27) et le corps stationnaire (1).
